# EUROPEAN PATENT APPLICATION

(11) **EP 3 057 057 A1**
(43) Date of publication of application: **17.08.2016**
(21) Application number: 16154400.2
(22) Date of filing: 05.02.2016
(51) Int. Cl.: G06Q 30/06, G06Q 30/02

(54) **METHOD FOR GENERATING AND UTILIZING WEB PAGE BASED ON BEHAVIOR PATTERN OF CUSTOMER**

(30) Priority: 11.02.2015 KR 20150021034
(71) Applicant: Samsung SDS Co., Ltd., Seoul (KR)
(72) Inventor: KIM, Jin-Gyeom, Seoul (KR); LEE, Won-Dong, Seoul (KR)
(74) Representative: Grünecker Patent- und Rechtsanwälte PartG mbB

(57) **Abstract**

Disclosed is a method for generating and utilizing a web page based on a behavior pattern of a customer. The method includes if the customer carrying a first terminal device assigned with an intrinsic identifier enters an arbitrary location of a store, receiving information indicating that the customer carrying the first terminal device has entered, receiving a log record associated with the behavior pattern of the customer through a second terminal device installed in the arbitrary location of the store, storing the log record in a folder corresponding to the intrinsic identifier assigned to the first terminal device, and generating a web page based on the log record.

## Description

### CROSS-REFERENCE TO RELATED APPLICATION

This application claims priority from Korean Patent Application No. 10-2015-0021034 filed on February 11, 2015 in the Korean Intellectual Property Office, the disclosure of which is incorporated herein by reference in its entirety.

### BACKGROUND

### 1. Field of the Invention

The present invention relates to a method for generating and utilizing a web page based on a behavior pattern of a customer, and more particularly, to a method for generating and utilizing a web page based on a behavior pattern of a customer, which receives information on the position of the customer and products inside a store through a terminal device distributed to the consumer or a terminal device installed in the store, and generates information on the products in which the customer is interested, based on the received information.

### 2. Description of the Related Art

In order to conduct advertisement or promotion of products, various attempts are being made to track behaviors of customers in a particular store and to construct the tracked behaviors into database.

For example, once customers are allowed to install an application on their own smart phones, location information of the customers inside a store may be received from the smart phones of the customers and products in which the customers are interested can be identified based on the received location information.

In a case of the aforementioned attempt, however, it is necessary to install an application on smart phones of customers, which may incur expenses for application installation. In addition, the customers may revolt against collection of personal data.

Accordingly, there have been emerged needs for methods of efficiently transmitting information on the products in which the customers are interested by analyzing behavior patterns of customers within a store without installing a separate application on a variety of mobile devices used by the customers.

### SUMMARY

The present invention provides a method for generating and utilizing a web page based on a behavior pattern of a customer, which can analyze the behavior pattern of the customer inside a store without collecting customer's personal information.

The present invention also provides a method for generating and utilizing a web page based on a behavior pattern of a customer, which can efficiently provide information on products in which the customer is interested based on the analysis result of the behavior pattern of the customer.

These and other objects of the present invention will be described in or be apparent from the following description of the preferred embodiments.

According to an aspect of the present invention, there is provided a method for generating and utilizing a web page based on a behavior pattern of a customer, the method including if the customer carrying a first terminal device assigned with an intrinsic identifier enters an arbitrary location of a store, receiving information indicating that the customer carrying the first terminal device has entered, receiving a log record associated with the behavior pattern of the customer through a second terminal device installed in the arbitrary location of the store, storing the log record in a folder corresponding to the intrinsic identifier assigned to the first terminal device, and generating a web page based on the log record.

In an embodiment of the present invention, the receiving of the information indicating that the customer carrying the first terminal device has entered may include receiving a message notifying that the customer carrying the first terminal device has entered with the intrinsic identifier assigned to the first terminal device, and generating a folder corresponding to the intrinsic identifier.

In an embodiment of the present invention, the message may include at least one of the intrinsic identifier assigned to the first terminal device, a time when the customer carrying the first terminal device enters the arbitrary location of the store, and position information on the arbitrary location of the store.

In an embodiment of the present invention, the log record associated with the behavior pattern of the customer may include the intrinsic identifier assigned to the first terminal device which is carried by the customer.

In an embodiment of the present invention, the log record associated with the behavior pattern of the customer may include at least one of information on products which the customer searched for through the second terminal device, consulting details of the customer, brochures browsed by the customer, content of queries entered by the customer, and a profile of a dealer who has offered consultation to the customer.

In an embodiment of the present invention, the storing of the log record may include searching for the folder corresponding to the intrinsic identifier included in the log record, and storing the log record in the folder corresponding to the intrinsic identifier.

In an embodiment of the present invention, the generating of the web page based on the log record may include receiving a request for generating the web page including the intrinsic identifier, and generating the web page using the log record stored in the folder corresponding to the intrinsic identifier.

In an embodiment of the present invention, the receiving of the request generating the web page including the intrinsic identifier may include receiving from a terminal device of an administrator the intrinsic identifier transmitted when the first terminal device is brought into contact with the terminal device of the administrator, and generating the web page using the log record in the folder corresponding to the intrinsic identifier and providing the web page to the terminal device of the administrator.

In an embodiment of the present invention, the method may further include transmitting a uniform resource locator (URL) for accessing to the generated web page to a mobile device of the customer.

In an embodiment of the present invention, the generating of the web page using the log record may include receiving information indicating that the customer carrying the first terminal device has entered from a third terminal device installed in an arbitrary location of the store, generating the web page using the log record associated with the behavior pattern of the customer, the log record received through the second terminal device, and providing the generated web page to the third terminal device.

According to another aspect of the present invention, there is provided a server including one or more processors, a memory on which a computer program executed by the processor is loaded, and a storage in which at least one folder corresponding to an intrinsic identifier assigned to a first terminal device carried by a customer and a log record included in the folder are stored, wherein the computer program is loaded to execute operations including if the customer carrying a first terminal device assigned with an intrinsic identifier enters an arbitrary location of a store, receiving information receiving information indicating that the customer carrying the first terminal device has entered, receiving a log record associated with the behavior pattern of the customer through a second terminal device installed in the arbitrary location of the store, storing the log record in a folder corresponding to the intrinsic identifier assigned to the first terminal device, and generating a web page based on the log record.

According to still another aspect of the present invention, there is provided a computer program stored in a recording medium in combination with a computing device, the computer program loaded for executing operations including if the customer carrying a first terminal device assigned with an intrinsic identifier enters an arbitrary location of a store, receiving information receiving information indicating that the customer carrying the first terminal device has entered, receiving a log record associated with the behavior pattern of the customer through a second terminal device installed in the arbitrary location of the store, storing the log record in a folder corresponding to the intrinsic identifier assigned to the first terminal device, and generating a web page based on the log record.

According to a further aspect of the present invention, there is provided a system for generating a web page based on a behavior pattern of a customer, the system including a first terminal device assigned with an intrinsic identifier to be distributed to a customer, a second terminal device installed in an arbitrary location of the store, and a server for receiving a log record from the second terminal device and generating a web page, wherein if the customer carrying the first terminal device enters the arbitrary location of the store, the second terminal device transmits information indicating that the customer carrying the first terminal device has entered to the server and transmits the log record associated with the behavior pattern of the customer to the server, and the server stores the received log record in a folder corresponding to the intrinsic identifier assigned to the first terminal device and generates the web page using the stored log record.

As described above, according to the present invention, behavior patterns of customers inside a store are analyzed through terminal devices distributed to the customers, and product information is provided to the customers based on the analyzed behavior patterns, thereby providing customized information without a vexatious task of installing a separate application in customers' mobile devices.

### BRIEF DESCRIPTION OF THE DRAWINGS

The above and other features and advantages of the present invention will become more apparent by describing in detail preferred embodiments thereof with reference to the attached drawings in which:
FIG. 1 is a system diagram illustrating a method for generating a web page based on a behavior pattern of a customer according to an embodiment of the present invention;
FIG. 2 is a diagram illustrating a method for generating a web page using a log record stored in a server and then providing the generated web page to a user according to an embodiment of the present invention;
FIG. 3 is a diagram illustrating a method for generating a web page using a log record stored in a server and providing the generated web page to a customer according to another embodiment of the present invention;
FIG. 4 is a diagram illustrating a method for providing information on products in which a customer is interested in such a manner that the information is included in a web page in real time;
FIGS. 5 to 7 are diagrams illustrating a method for generating a web page with customers' preference reflected thereon based on behavior patterns of customers by generating log records associated with the behavior patterns of customers and storing the log records classified by customer;
FIG. 8 is a flowchart illustrating a method for generating a web page based on a behavior pattern of a customer according to an embodiment of the present invention;
FIG. 9 is a flowchart illustrating a method for operating a server generating a web page based on behavior patterns of customers according to an embodiment of the present invention; and
FIG. 10 is a functional block diagram for explaining a server for generating a web page and providing the web page to customers.

### DETAILED DESCRIPTION OF THE EMBODIMENTS

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like numbers refer to like elements throughout.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In addition, it will be understood that the singular forms are intended to include the plural forms as well. It will be further understood that the terms "comprises" and/or "comprising," when used in this specification, specify the presence of stated features, integers, steps, operations, elements, and/or components, but do not preclude the presence or addition of one or more other features, operations, elements, and/or components thereof.

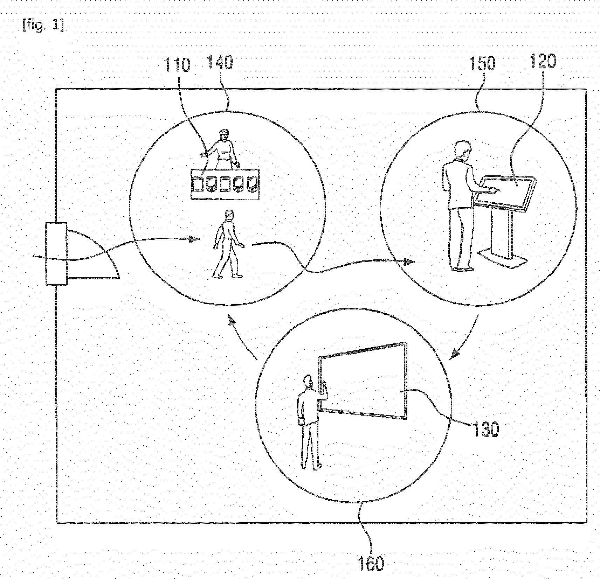

Hereinafter, a method for generating a web page based on a behavior pattern of a customer according to an embodiment of the present invention will be described with reference to FIG. 1. FIG. 1 is a system diagram illustrating a method for generating a web page based on a behavior pattern of a customer according to an embodiment of the present invention.

The method for generating a web page based on a behavior pattern of a customer according to the present embodiment will now be described, by way of example, with regard to a case where a customer enters a store in which a variety of products are exhibited to then be provided with a terminal device from an information desk and looks over information about a variety of products while wandering around the store.

If the customer enters a first location 140 in which the information desk is installed, the first terminal device 110 assigned with an intrinsic identifier is distributed to the customer. In detail, while a store dealer distributes the first terminal device 110 to the customer, he/she may transmit a use start message of the first terminal device 110 to a server.

For example, the store dealer may transmit information relevant to the first terminal device 110 to be distributed to the customer to the server using a desktop PC installed on the information desk or may transmit the use start message of the first terminal device 110 to the server such that the first terminal device 110 is brought into contact with a contact type terminal device installed on the information desk.

Alternatively, the first terminal device 110 distributed to the customer may be implemented to transmit the use start message to the server.

Here, the use start message transmitted to the server may include the intrinsic identifier assigned to the first terminal device 110, the use start time of the first terminal device 110, and so on.

Thereafter, if the customer carrying the first terminal device 110 moves to another location inside the store, that is, a second location 150, a signal indicating that the customer enters the second location 150 is transmitted to the server. Here, the signal indicating that the customer enters a particular location may be implemented to allow the customer carrying the first terminal device 110 to bring the first terminal device 110 into contact with the second terminal device 120 installed in the second location 150 or to allow a beacon to be installed in the second location 150 to recognize that the customer carrying the first terminal device 110 has entered the second location 150.

If the customer having entered the second location 150 searches for information on products which are exhibited in the second location 150 through the second terminal device 120 installed therein, a log record including information on the products which the customer searched for is transmitted to the server together with the intrinsic identifier assigned to the first terminal device 110.

For example, the log record, including information indicating that the customer searched for information on a product "A" through the second terminal device 120 or information indicating that the customer compared the product "A" with a product "B," may be transmitted to the server.

After receiving the log record, the server may store the log record in the folder corresponding to the first terminal device 110 distributed to the customer.

In detail, the log record may include images of the products which the customer searched for through the terminal device installed in the store, video clips of the products and various kinds of information on the products.

Likewise, if the customer carrying the first terminal device 110 moves from the second location 150 to a third location 160, the information indicating that the customer has moved is transmitted to the server and the information of the products which the customer searched for is then transmitted to the server together with the intrinsic identifier assigned to the first terminal device 110.

After the customer having looked around the products which are exhibited in the store returns to the first location 140 to have a consultation with the store dealer, a web page including the information on the products which the user searched for in the store is provided to the customer when the first terminal device 110 distributed by the store dealer is brought into contact with a terminal device 210 of the store dealer.

In detail, the web page provided to the customer may be generated using the log record with the customer's behavior in the store reflected thereon.

A method for generating the web page using the log record stored in the server and then providing the generated web page to the customer will now be described in detail.

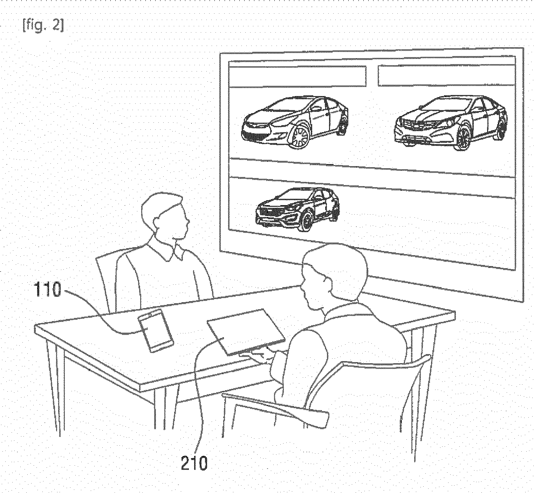

FIG. 2 is a diagram illustrating a method for generating a web page using a log record stored in a server and then providing the generated web page to a user according to an embodiment of the present invention.

If the customer brings the first terminal device 110 distributed by the store dealer when he/she enters the store into contact with the store dealer's terminal device 210, the intrinsic identifier assigned to the first terminal device 110 is transmitted to the server through the store dealer's terminal device 210.

After receiving the intrinsic identifier assigned to the first terminal device 110, the server generates the web page using the log record stored in a folder corresponding to the intrinsic identifier.

Since the folder of the server includes log records indicating the information on the products which the customer searched for in the store, images or video clips of the products, actions taken by the customer in the store, the web page may be generated using the log record, thereby efficiently providing the user with the information on the products in which the user is interested.

For example, if the customer searches for information on a product "A" within the store, he/she may be allowed to download a brochure relevant to the product "A" or may be provided with a web page including images or video clips of the product "A."

Alternatively, if the user searches for information on a plurality of products within the store, he/she may be provided with a web page generated based on comparison and analysis results of the products which the user searched for.

As described above, behavior patterns of customers in the store are analyzed through terminals devices distributed to the customers and product information based on the behavior patterns is provided to the customers, thereby efficiently providing customized information without a vexatious task of installing a separate application in customers' mobile devices.

Meanwhile, in the above-described embodiment, the customer is provided with the web page generated when the first terminal device 110 is brought into contact with the store dealer's terminal device 210, but aspects of the present invention are not limited thereto.

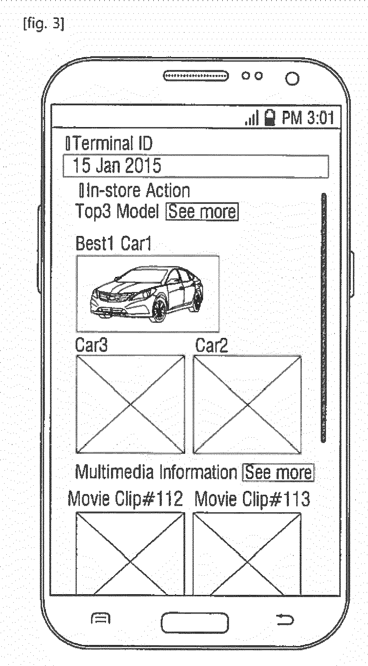

FIG. 3 is a diagram illustrating a process of generating a web page using a log record stored in a server and then providing the generated web page to a user according to another embodiment of the present invention.

If the customer carrying the first terminal device 110 finishes looking around the products which are exhibited in the store and returns the first terminal device 110 to the store dealer, a uniform resource locator (URL) for accessing to the web page generated using the log record stored in the folder corresponding to the first terminal device 110 among folders stored in the server may be provided to the customer.

Alternatively, if the customer brings the first terminal device 110 into contact with his/her own mobile device, an intrinsic identifier assigned to the first terminal device 110 may be transmitted to the customer's mobile device through a wireless communication, such as near field communication (NFC) or radio frequency, and the mobile device may transmit a request for generating a web page including the intrinsic identifier to the server.

After receiving the request for generating a web page including the intrinsic identifier, the server may generate the web page using the log record stored in the folder corresponding to the intrinsic identifier and may provide the user's mobile device with the URL accessible to the web page.

For example, the customer may receive the URL of the web page in the form of a short message service (SMS).

If the customer selects the URL linked through the SMS, a web page corresponding to the first terminal device 110 carried by the customer is loaded and a screen shown in FIG. 3 is displayed on the mobile device 110.

The web page loaded and displayed on the mobile device 110 carried by the customer may include detailed information on the products which the customer searched for in the store, images, video clips of the products, and so on.

Meanwhile, in the aforementioned embodiment, when the customer having looked around the products which are exhibited in the store returns to the first terminal device 110, the information on the products which the customer searched for in the store is provided to the customer in a state in which the information is included in the web page, but aspects of the present invention are not limited thereto. The information on the products which the customer searched for in the store may also be provided in such a manner that the information is included in a web page in real time.

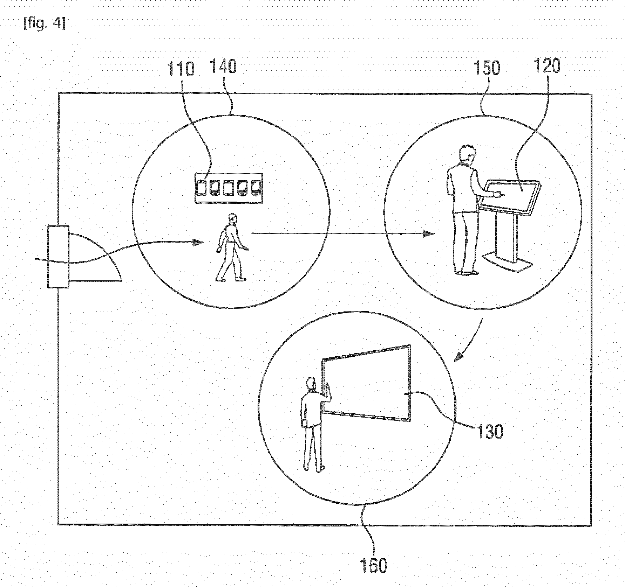

FIG. 4 is a diagram illustrating a method for providing information on products in which a customer is interested in such a manner that the information is put on a web page in real time.

The method for generating a web page using a log record stored in a server and providing the generated web page to a customer according to another embodiment of the present invention will now be described, by way of example, with regard to a case where the customer to whom a first terminal device 110 is distributed in a first location 140 of a store searches for information about a variety of products while wandering around the store from a second location 150 to a third location 160.

In addition, the present embodiment will be described, by way of example, with regard to a case where second and third terminal devices 120 and 130 by which products are exhibited and information on the exhibited products can be searched for are installed in partitioned locations.

If the customer carrying the first terminal device 110 enters a second location 150, information indicating that the customer has entered is transmitted to a server. Thereafter, log information about products which the customer searched for through the second terminal device 120 installed in the second location 150 is transmitted to the server together with the intrinsic identifier of the first terminal device 110.

The log information transmitted to the server is stored in a folder corresponding to the intrinsic identifier of the first terminal device 110 carried by the customer and is used in generating a web page for providing the customer with product information.

If the customer leaves the second location 150 and then enters the third location 160, a signal indicating that the customer carrying the first terminal device 110 has entered the third location 160 is transmitted to the server.

In this case, the information on the products which the customer searched for in the second location 150 may be preferentially exposed to the third terminal device 130 installed in the third location 160 or the information about a comparison result of the products searched for in the second location 150 with the products which are exhibited in the third location 160 may be displayed on the third terminal device 130.

For example, the first terminal device 110 carried by the customer having entered the third location 160 is allowed to contact the third terminal device 130 installed in the third location 160.

If the customer brings the first terminal device 110 carried by him/her into contact with the third terminal device 130, the intrinsic identifier assigned to the first terminal device 110 is transmitted to the server, thereby transmitting the signal indicating that the customer has entered the third location 160 to the server.

After receiving the signal, the server transmits a log record stored in the folder corresponding to the first terminal device 110 to the third terminal device 160, thereby allowing the information on the products which the customer searched for in the second location 150 to be displayed on the third terminal device 160.

For example, if the customer searched for the information on a product "A" in the second location 150, the corresponding log record is transmitted to the third terminal device 130, thereby allowing the information on the product "A" to be preferentially exposed to the third terminal device 130.

In addition, the information about a comparison result of the product "A" which the customer searched for in the second location 150 with the product "B" which is exhibited in the third location 160 may be displayed on the third terminal device 130, thereby allowing the information desired by the user to be exposed.

As described above, the process of providing the information tailored to customers' preference by analyzing behavior patterns of customers is accomplished by storing log records associated with the behavior patterns of customers in various locations.

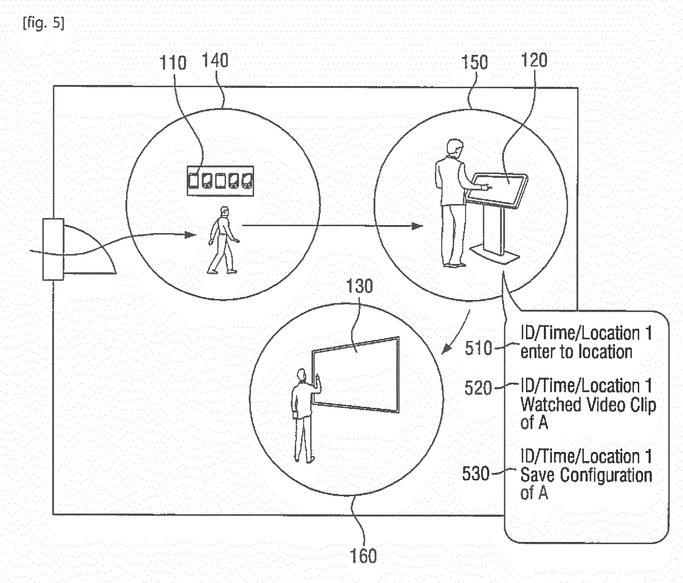

FIGS. 5 to 7 are diagrams illustrating a method for generating a web page with customers' preference reflected thereon based on behavior patterns of customers by generating log records associated with the behavior patterns of customers and storing the log records classified by customer.

In detail, the process of sequentially generating log records associated with the behavior patterns of customers in various locations to then transmit the generated log records to the server and the server storing the log records classified by customer will be described with reference to FIGS. 5 to 7.

As shown in FIG. 5, if the customer carrying the first terminal device 110 enters the second location 150, a first log record 510 is generated. In detail, the first log record 510 may include the identifier assigned to the first terminal device 110 distributed to the customer, a time when the corresponding log record is generated, a position of the customer, and a message notifying that the customer enters the second location 150.

In addition, a behavior pattern of the customer derived from the second terminal device 120 installed in the second location 150 may also be generated as a log record to then be transmitted to the server.

For example, if the customer watched a video clip of the product "A" on the second terminal device 120, a second log record 520 is generated, the second log record 520 including a message indicating the behavior pattern of the customer together with the identifier of the first terminal device 100, for example, a message "watched video clip of A."

Likewise, a third log record 530 associated with another behavior pattern input through the second terminal device 120 may be generated.

Meanwhile, the log records associated with behavior patterns are not limited to those shown in FIG. 5. Rather, the log records may include a variety of behavior patterns manifested in the store.

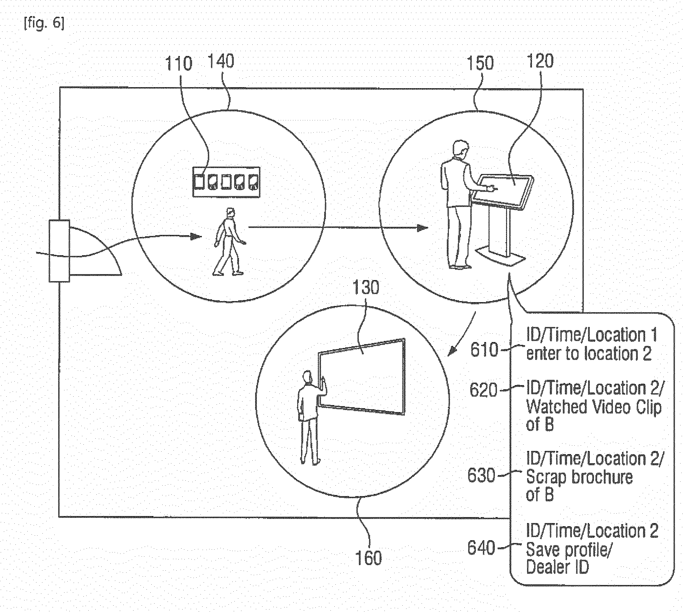

For example, as shown in FIG. 6, if the customer enters a query relevant to the product "B" or makes a request for information on the product "B" to a dealer of the store, the log record may include information about the dealer who has provided the information to the customer.

Therefore, in a case where there is something more the customer is curious to know about the product, the customer may be provided with additional product information from the dealer who has offered consultation to the customer.

Meanwhile, the log records generated through the above-described process are transmitted to the server and then stored by folder.

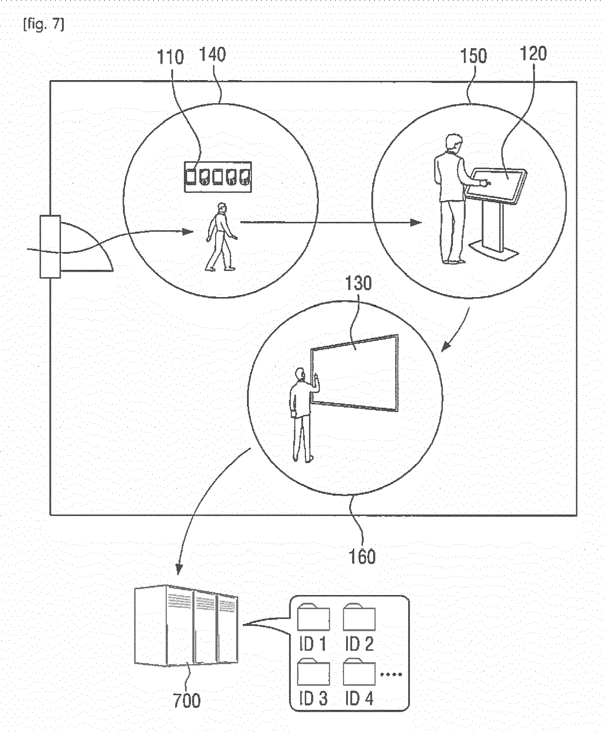

FIG. 7 is a diagram illustrating a method of storing the log records generated according to an embodiment of the present invention in the server.

The log records generated through the above-described process may include identifiers of terminal devices distributed to customers. Therefore, the log records transmitted to the server may be analyzed according to the identifiers included in the log records to then be stored in folders.

For example, assuming that an identifier of a terminal device distributed to an arbitrary customer is "xxx," a folder corresponding to the identifier "xxx" is generated in the server, and a log record associated with the behavior pattern of the customer carrying the terminal device is stored in the folder corresponding to the identifier "xxx."

That is to say, log records associated with behavior patterns of the customer in the store are stored in the respective folders generated in the server.

Therefore, if a request for generating a web page is received from the customer corresponding to the identifier "xxx," the server may generate the web page using the pre-stored log record stored in the folder of the server, corresponding to the identifier "xxx" and then provide the generated web page to the customer.

As described above, a terminal device is distributed to a customer entering a store, a folder corresponding to the terminal device is generated in the server, and a log record associated with the behavior pattern of the customer in the store is then stored in the folder, thereby efficiently providing the information on the products suited to the customer's preference.

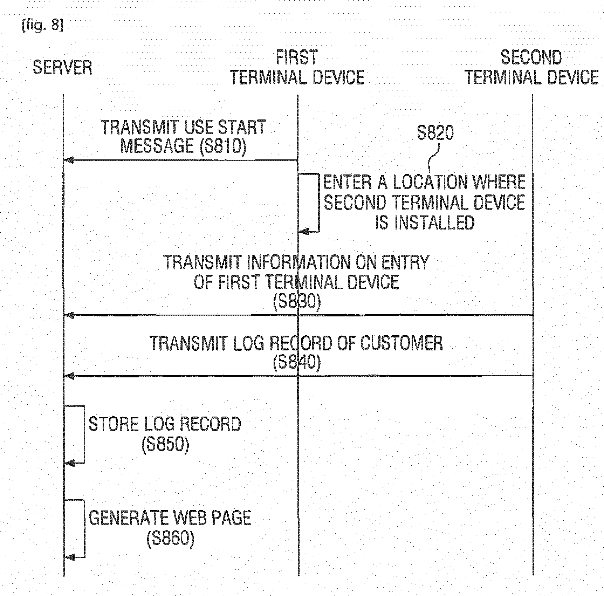

FIG. 8 is a flowchart illustrating a method for generating a web page based on a behavior pattern of a customer according to an embodiment of the present invention.

The method for generating a web page based on a behavior pattern of a customer according to an embodiment of the present invention will now be described, by way of example, with regard to a case where a first terminal device 110 is distributed to the customer, a second terminal device 120 is installed in an arbitrary location of a store, and the user searches for information about products through the second terminal device 120, which is, however, provided only for convenient explanation. In actual implementation, terminal devices may be installed in various locations of multiple stores and log records associated with behavior patterns of customers may be received from the respective terminal devices.

If the first terminal device 110 is distributed to the customer, a use start message of the first terminal device 110 is transmitted to the server (S810). In detail, the use start message may include an intrinsic identifier assigned to the first terminal device 110 and a message notifying that the first terminal device 110 starts to be used.

Meanwhile, after receiving the use start message, the server may generate the folder corresponding to the identifier of the first terminal device 110 distributed to the customer to store the log record associated with the behavior pattern of the customer who uses the first terminal device 110.

Then, if the customer carrying the first terminal device 110 enters an arbitrary location of the store (S820), a signal indicating that the customer has entered the arbitrary location is transmitted to the server (S830).

For example, a beacon may be installed in an arbitrary location of the store to recognize that the customer carrying the first terminal device 110 has entered, or a near field communication (NFC) module or a radio frequency (RF) module may be installed in the first terminal device 110 to allow the customer to bring the first terminal device 110 into contact with the second terminal device 120 installed in the arbitrary location, thereby transmitting the signal indicating that the customer has entered the arbitrary location to the server.

Thereafter, if the customer searches for information on products through the second terminal device 120 or enters queries about the products, log records relevant to the information on products or the queries are transmitted to the server (S840).

After receiving the log record associated with the behavior pattern of the customer in the store, the server stores the received log record in the folder corresponding to the first terminal device 110 carried by the customer (S850).

Thereafter, if a request for generating a web page is received from an arbitrary customer, the web page is generated using the log record stored in the folder corresponding to an identifier included in the request for generating a web page and is then provided to the customer.

As described above, if the web page is generated based on the log record, the information on the products in which the customer is interested can be efficiently provided.

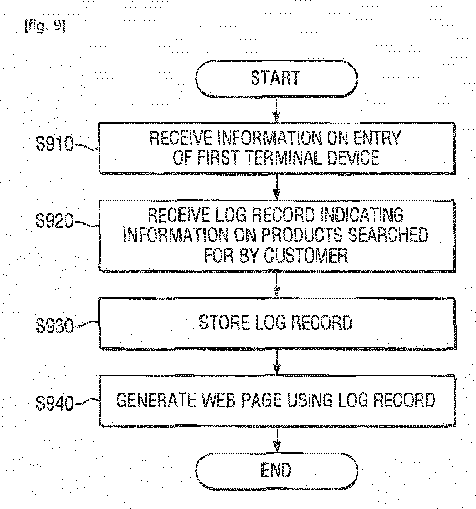

FIG. 9 is a flowchart illustrating a method for operating a server generating a web page based on behavior patterns of customers according to an embodiment of the present invention.

The server receives the signal indicating that the customer carrying the first terminal device 110 has entered the arbitrary location of the store where the second terminal device 120 is installed (S910). In detail, the signal of the entry information may be received from the first terminal device 110 or the second terminal device 120 installed in the arbitrary location of the store.

Thereafter, when a user takes an action of searching for product information through the second terminal device 120 in the arbitrary location of the store, the server receives the log record associated with the behavior pattern of the customer through the second terminal device 120 (S920).

Since the log record includes the intrinsic identifier assigned to the first terminal device 110, the behavior patter of the customer who has looked around the store while carrying the first terminal device 110 can be identified by analyzing the log record includes the intrinsic identifier assigned to the first terminal device 110.

The log record received in the server is stored in the folder corresponding to the intrinsic identifier included in the log record (S930), and the web page is generated using the log record when a request for generating a web page is received (S940).

For example, if the customer having looked around the store while carrying the first terminal device 110 returns to an information desk and brings the first terminal device 110 into contact with a terminal device of an administrator, the intrinsic identifier assigned to the first terminal device 110 is transmitted to the administrator's terminal device.

If the administrator's terminal device makes a request for generating a web page to the server using the intrinsic identifier, the server detects a folder corresponding to the intrinsic identifier and generates the web page using the log record stored in the folder.

The generated web page is provided to the administrator's terminal device to allow the user to look over the information on the products browsed by the user in the store at a glance. For example, the web page may include detailed information on the products browsed by the user in the store, information on a comparison result of the products searched for by the user, and so on.

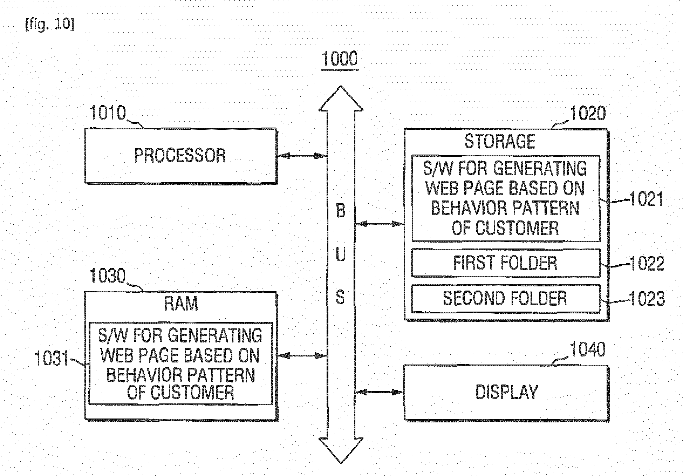

FIG. 10 is a functional block diagram for explaining a server for generating a web page and providing the web page to customers.

The server 1000 shown in FIG. 10 includes one or more processors 1010, a storage 1020, a memory 1030, and a network interface 1040.

The storage 1020 may store a program for executing operations including if the customer carrying a first terminal device assigned with an intrinsic identifier enters an arbitrary location within a store, receiving information indicating that the customer carrying the first terminal device has entered; receiving a log record associated with the behavior pattern of the customer through a second terminal device installed in the arbitrary location of the store; storing the log record in a folder corresponding to the intrinsic identifier assigned to the first terminal device; and generating a web page based on the log record. The program may be loaded onto the memory 1030 to then be executed by the processor 1010.

The method for generating the web page according to the present invention can be recorded in programs that can be executed on a computer and be implemented through general purpose digital computers. In addition, the data format used in the method for for generating the web page according to the present invention may be recorded in a computer-readable recording medium using various means. Examples of the computer-readable recording medium may include recording media such as magnetic storage media (e.g., ROMs, floppy disks, hard disks, etc.) and optical recording media (e.g., CD-ROMs or DVDs).

While the present invention has been particularly shown and described with reference to exemplary embodiments thereof, it will be understood by those of ordinary skill in the art that various changes in form and details may be made therein without departing from the spirit and scope of the present invention as defined by the following claims. It is therefore desired that the present embodiments be considered in all respects as illustrative and not restrictive, reference being made to the appended claims rather than the foregoing description to indicate the scope of the invention. The following is a list of further preferred embodiments of the invention:
Embodiment 1. A method for generating a web page based on a behavior pattern of a customer, the method comprising:
   if the customer carrying a first terminal device assigned with an intrinsic identifier enters an arbitrary location of a store, receiving information indicating that the customer carrying the first terminal device has entered;
   receiving a log record associated with the behavior pattern of the customer through a second terminal device installed in the arbitrary location of the store;
   storing the log record in a folder corresponding to the intrinsic identifier assigned to the first terminal device; and
   generating a web page based on the log record.
Embodiment 2. The method of embodiment 1, wherein the receiving of the information indicating that the customer carrying the first terminal device has entered comprises:
   receiving a message notifying that the customer carrying the first terminal device has entered with the intrinsic identifier assigned to the first terminal device; and
   generating a folder corresponding to the intrinsic identifier.
Embodiment 3. The method of embodiment 2, wherein the message includes at least one of the intrinsic identifier assigned to the first terminal device, a time when the customer carrying the first terminal device enters the arbitrary location of the store, and position information on the arbitrary location of the store.
Embodiment 4. The method of embodiment 1, wherein the log record associated with the behavior pattern of the customer includes the intrinsic identifier assigned to the first terminal device which is carried by the customer.
Embodiment 5. The method of embodiment 4, wherein the log record associated with the behavior pattern of the customer includes at least one of information on products which the customer searched for through the second terminal device, consulting details of the customer, brochures browsed by the customer, content of queries entered by the customer, and a profile of a dealer who has offered consultation to the customer.
Embodiment 6. The method of embodiment 4, wherein the storing of the log record comprises:
   searching for the folder corresponding to the intrinsic identifier included in the log record; and
   storing the log record in the folder corresponding to the intrinsic identifier.
Embodiment 7. The method of embodiment 1, wherein the generating of the web page based on the log record comprises:
   receiving a request for generating the web page including the intrinsic identifier; and
   generating the web page using the log record stored in the folder corresponding to the intrinsic identifier.
Embodiment 8. The method of embodiment 7, wherein the receiving of the request generating the web page including the intrinsic identifier comprises:
   receiving from a terminal device of an administrator the intrinsic identifier transmitted when the first terminal device is brought into contact with the terminal device of the administrator; and
   generating the web page using the log record in the folder corresponding to the intrinsic identifier and providing the web page to the terminal device of the administrator.
Embodiment 9. The method of embodiment 7, further comprising transmitting a uniform resource locator (URL) for accessing to the generated web page to a mobile device of the customer.
Embodiment 10. The method of embodiment 9, wherein the generating of the web page using the log record comprises:
   receiving information indicating that the customer carrying the first terminal device has entered from a third terminal device installed in an arbitrary location of the store;
   generating the web page using the log record associated with the behavior pattern of the customer, the log record received through the second terminal device; and
   providing the generated web page to the third terminal device.
Embodiment 11. A server comprising:
   one or more processors;
   a memory on which a computer program executed by the processor is loaded; and
   a storage in which at least one folder corresponding to an intrinsic identifier assigned to a first terminal device carried by a customer and a log record included in the folder are stored,
   wherein the computer program is loaded to execute operations comprising:
      if the customer carrying a first terminal device assigned with an intrinsic identifier enters an arbitrary location of a store, receiving information receiving information indicating that the customer carrying the first terminal device has entered;
      receiving a log record associated with the behavior pattern of the customer through a second terminal device installed in the arbitrary location of the store;
      storing the log record in a folder corresponding to the intrinsic identifier assigned to the first terminal device; and
      generating a web page based on the log record.
Embodiment 12. A system for generating a web page based on a behavior pattern of a customer, the system comprising:
   a first terminal device assigned with an intrinsic identifier to be distributed to a customer;
   a second terminal device installed in an arbitrary location of the store; and
   a server for receiving a log record from the second terminal device and generating a web page,
   wherein if the customer carrying the first terminal device enters the arbitrary location of the store, the second terminal device transmits information indicating that the customer carrying the first terminal device has entered to the server and transmits the log record associated with the behavior pattern of the customer to the server, and the server stores the received log record in a folder corresponding to the intrinsic identifier assigned to the first terminal device and generates the web page using the stored log record.

## Claims

1. A method for generating a web page based on a behavior pattern of a customer, the method comprising:
if the customer carrying a first terminal device assigned with an intrinsic identifier enters an arbitrary location of a store, receiving (S910) information indicating that the customer carrying the first terminal device has entered;
receiving (S920) a log record associated with the behavior pattern of the customer through a second terminal device installed in the arbitrary location of the store;
storing (S930) the log record in a folder corresponding to the intrinsic identifier assigned to the first terminal device; and
generating (S940) a web page based on the log record.

2. The method of claim 1, wherein the receiving (S910) of the information indicating that the customer carrying the first terminal device has entered comprises:
receiving a message notifying that the customer carrying the first terminal device has entered with the intrinsic identifier assigned to the first terminal device; and
generating a folder corresponding to the intrinsic identifier.

3. The method of claim 2, wherein the message includes at least one of the intrinsic identifier assigned to the first terminal device, a time when the customer carrying the first terminal device enters the arbitrary location of the store, and position information on the arbitrary location of the store.

4. The method of claim 1, wherein the log record associated with the behavior pattern of the customer includes the intrinsic identifier assigned to the first terminal device which is carried by the customer.

5. The method of claim 4, wherein the log record associated with the behavior pattern of the customer includes at least one of information on products which the customer searched for through the second terminal device, consulting details of the customer, brochures browsed by the customer, content of queries entered by the customer, and a profile of a dealer who has offered consultation to the customer.

6. The method of claim 4, wherein the storing (S930) of the log record comprises:
searching for the folder corresponding to the intrinsic identifier included in the log record; and
storing the log record in the folder corresponding to the intrinsic identifier.

7. The method of claim 1, wherein the generating (S940) of the web page based on the log record comprises:
receiving a request for generating the web page including the intrinsic identifier; and
generating the web page using the log record stored in the folder corresponding to the intrinsic identifier.

8. The method of claim 7, wherein the receiving of the request generating the web page including the intrinsic identifier comprises:
receiving from a terminal device of an administrator the intrinsic identifier transmitted when the first terminal device is brought into contact with the terminal device of the administrator; and
generating the web page using the log record in the folder corresponding to the intrinsic identifier and providing the web page to the terminal device of the administrator.

9. The method of claim 7, further comprising transmitting a uniform resource locator (URL) for accessing to the generated web page to a mobile device of the customer.

10. The method of claim 9, wherein the generating of the web page using the log record comprises:
receiving information indicating that the customer carrying the first terminal device has entered from a third terminal device installed in an arbitrary location of the store;
generating the web page using the log record associated with the behavior pattern of the customer, the log record received through the second terminal device; and
providing the generated web page to the third terminal device.

11. A server comprising:
one or more processors;
a memory on which a computer program executed by the processor is loaded; and
a storage in which at least one folder corresponding to an intrinsic identifier assigned to a first terminal device carried by a customer and a log record included in the folder are stored,
wherein the computer program comprises instructions which direct the server to perform a method according to one of claims 1 to 10.

12. A system for generating a web page based on a behavior pattern of a customer, the system comprising:
a first terminal device assigned with an intrinsic identifier to be distributed to a customer;
a second terminal device installed in an arbitrary location of the store; and
a server for receiving a log record from the second terminal device and generating a web page,
wherein if the customer carrying the first terminal device enters (S820) the arbitrary location of the store, the second terminal device transmits (S830) information indicating that the customer carrying the first terminal device has entered to the server and transmits (S840) the log record associated with the behavior pattern of the customer to the server, and the server stores (S850) the received log record in a folder corresponding to the intrinsic identifier assigned to the first terminal device and generates (S860) the web page using the stored log record.
